# FASCICULE DE BREVET EUROPEEN

(11) **EP 3 503 276 B1**
(45) Date de publication et mention de la délivrance du brevet: **01.07.2020**
(21) Numéro de dépôt: 18208321.2
(22) Date de dépôt: 26.11.2018
(51) Int. Cl.: H01M 8/2495, H01M 8/04029, H01M 8/04223

(54) **SYSTÈME DE GÉNÉRATION D'ÉLECTRICITÉ INCLUANT DEUX PILES À COMBUSTIBLE À TEMPERATURES DE FONCTIONNEMENT DIFFERENTES**
STROMERZEUGUNGSSYSTEM, DAS ZWEI BRENNSTOFFZELLEN MIT UNTERSCHIEDLICHEN BETRIEBSTEMPERATUREN UMFASST
POWER GENERATION SYSTEM INCLUDING TWO FUEL CELLS HAVING DIFFERENT OPERATING TEMPERATURES

(30) Priorité: 20.12.2017 FR 1762664
(43) Date de publication de la demande: 26.06.2019
(73) Titulaire: Commissariat à l'Énergie Atomique et aux Énergies Alternatives, 75015 Paris (FR)
(72) Inventeur: POIROT-CROUVEZIER, Jean-Philippe, 38450 SAINT-GEORGES DE COMMIERS (FR); ESCRIBANO, Sylvie, 38000 GRENOBLE (FR)
(74) Mandataire: GIE Innovation Competence Group

(56) Documents cités:
- WO-A1-2014/111686
- WO-A1-2017/092853
- US-A1- 2004 091 761

## Description

L'invention concerne les piles à combustible, et plus particulièrement les piles à combustibles combinant des empilements de cellules électrochimiques ayant des températures de fonctionnement distinctes.

Les piles à combustible sont notamment envisagées comme source d'énergie pour des véhicules automobiles produits à grande échelle dans le futur ou comme sources d'énergie auxiliaire dans l'aéronautique. Une pile à combustible est un dispositif électrochimique qui convertit de l'énergie chimique directement en énergie électrique. Une pile à combustible comprend un empilement en série de plusieurs cellules. Chaque cellule génère typiquement une tension de l'ordre de 1 Volt, et leur empilement permet de générer une tension d'alimentation d'un niveau plus élevé, par exemple de l'ordre d'une centaine de volts.

Parmi les types de piles à combustible connus, on peut notamment citer la pile à combustible à membrane d'échange de protons, dite PEM. Certaines piles à combustible à PEM fonctionnent à basse température, d'autres piles à combustible à PEM fonctionnant à haute température. L'association de deux types de piles à combustible peut s'avérer avantageuse dans certains systèmes, du fait des paramètres de fonctionnement différents des piles à combustible. Par exemple, le document US2004091761 décrit deux piles à combustible opérant à températures différentes, chacune des deux piles à combustible étant pourvue d'un circuit de refroidissement.

Le document DE102008022581 décrit un système couplant une pile à combustible à membrane échangeuse de protons à haute température avec une pile à combustible à membrane échangeuse de protons à plus basse température, utilisées avec du carburant dihydrogène. La pile à haute température présente l'avantage d'être tolérante à la présence d'oxyde de carbone dans le dihydrogène. Par ailleurs, la pile à combustible à haute température ne nécessite pas une humidification des gaz de réactifs. La pile à combustible à membrane échangeuse de protons à basse température présente l'avantage d'avoir un temps de réponse beaucoup plus réduit au démarrage du système, alors que la pile à combustible à haute température nécessite un réchauffage préalable à la fois chronophage et consommateur d'énergie. Ainsi, ce système utilise une pile à combustible à basse température de faible puissance pour une phase de démarrage, et une pile à combustible à haute température de forte puissance pour le fonctionnement du système en régime établi.

Lors d'un démarrage, l'utilisation de la pile basse température permet de disposer plus rapidement d'une production d'électricité. Lors du démarrage de la pile basse température, un fluide caloporteur s'écoule dans celle-ci pour la refroidir et est donc réchauffé. Par l'intermédiaire d'un échangeur de chaleur, le fluide caloporteur de la pile basse température réchauffe un fluide caloporteur de la pile haute température. Le fluide caloporteur de la pile haute température étant réchauffé lors du démarrage du système, son temps de démarrage est réduit, et le rendement énergétique du système est optimisé, ce réchauffement étant obtenu par une chaleur qui serait autrement perdue. Une fois la température de fonctionnement de la pile haute température atteinte, celle-ci peut être utilisée pour le régime établi du système, en bénéficiant des avantages technologiques de celle-ci.

Un tel système présente des inconvénients. En effet, en régime établi, lorsque la pile à combustible à haute température est démarrée, le fluide caloporteur la traversant réchauffe la pile basse température. La pile basse température devant évacuer davantage de chaleur, sa puissance de fonctionnement doit être réduite, ce qui limite grandement son intérêt. Par ailleurs, les plages de température de fonctionnement de la pile à combustible à basse température et de la pile à combustible à haute température sont disjointes. Par conséquent, même lorsque que la pile à combustible à basse température a atteint sa température de fonctionnement maximale, cette température de fonctionnement est encore insuffisante pour permettre de démarrer la pile à combustible à haute température. Un dispositif de chauffage additionnel est donc nécessaire pour réchauffer davantage la pile à combustible à haute température.

L'invention vise à résoudre un ou plusieurs de ces inconvénients. L'invention porte ainsi sur un système de génération d'électricité, tel que défini dans les revendications annexées.

L'homme du métier comprendra que chacune des caractéristiques des variantes des revendications dépendantes ou de la description peut être combinée indépendamment aux caractéristiques d'une revendication indépendante, sans pour autant constituer une généralisation intermédiaire.

D'autres caractéristiques et avantages de l'invention ressortiront clairement de la description qui en est faite ci-après, à titre indicatif et nullement limitatif, en référence aux dessins annexés, dans lesquels :
- la figure 1 est une représentation schématique d'un système de production d'électricité selon un exemple d'un premier mode de réalisation de l'invention ;
- les figures 2 à 6 sont des tableaux récapitulant différents états d'ouverture de vannes du système en fonction de sa phase de fonctionnement ;
- la figure 7 est une représentation schématique d'un système de production d'électricité selon un exemple d'un deuxième mode de réalisation de l'invention ;
- les figures 8 à 12 sont des tableaux récapitulant différents états d'ouverture des vannes du système de la figure 7 en fonction de sa phase de fonctionnement.

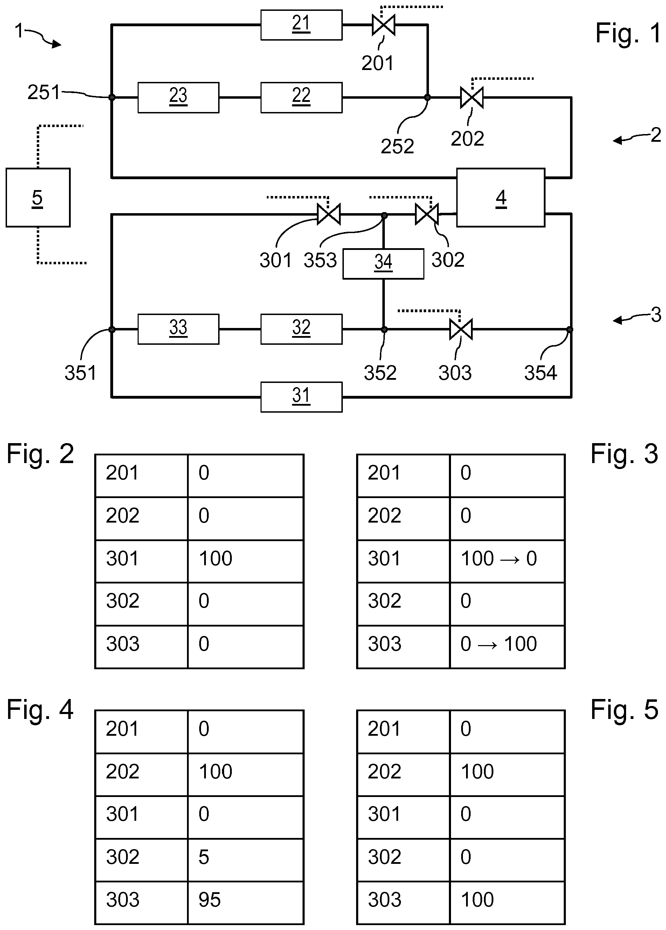

La figure 1 est une représentation schématique d'un système de production d'électricité 1 selon un exemple d'un premier mode de réalisation de l'invention. Le système 1 comprend une pile à combustible à haute température 22 et une pile à combustible à basse température 32.

La pile à combustible 22 est incluse dans un circuit 2 de fluide caloporteur haute température. Plus particulièrement, des conduits d'écoulement positionnés dans une zone réactive de la pile à combustible 22 sont parcourus par le fluide caloporteur du circuit 2. Le circuit 2 comporte une première branche traversant un radiateur 21 et une vanne 201 connectés en série. Le circuit 2 comporte une deuxième branche traversant une pompe 23 et la pile à combustible 22. Les première et deuxième branches sont connectées en parallèle entre les embranchements 251 et 252. Le circuit 2 comporte une troisième branche traversant une partie haute température d'un échangeur thermique 4 est une vanne 202.

La pile à combustible 32 est incluse dans un circuit 3 de fluide caloporteur basse température. Plus particulièrement, des conduits d'écoulement positionnés dans une zone réactive de la pile à combustible 32 sont parcourus par le fluide caloporteur du circuit 3. Le circuit 3 comporte une première branche traversant un radiateur 31, connecté entre les embranchements 351 et 354. Le circuit 3 comporte une deuxième branche traversant une pompe 33 et la pile à combustible 32 connectées en série. La deuxième branche est connectée entre l'embranchement 351 et un embranchement 352. Une troisième branche inclut une vanne 303, entre les embranchements 352 et 354. Une quatrième branche inclut une vanne 301, entre l'embranchement 351 et un embranchement 353. Une cinquième branche inclut un dispositif de chauffage 34 de fluide caloporteur, entre les embranchements 352 et 353. Une sixième branche inclut une vanne 302 et une partie basse température de l'échangeur thermique 4, connectées en série entre les embranchements 353 et 354.

Le circuit 2 et le circuit 3 sont donc couplés par l'intermédiaire de l'échangeur thermique 4. Le système 1 comporte en outre un circuit de commande 5 de l'ouverture/fermeture des vannes 201, 202, 301, 302 et 303 et de pilotage des pompes 23 et 33.

La pile à combustible à haute température 22 présente une température de fonctionnement typiquement comprise entre 100 et 180°C, typiquement entre 140°C et 180°C. La pile à combustible 22 peut par exemple être une pile à membrane échangeuse de protons de type polybenzimidazole (PBI) dopé avec de l'acide phosphorique, ou une pile à combustible à électrolyte de type acide phosphorique. Une telle pile à combustible 22 s'avère particulièrement tolérante à une pollution en oxyde de carbone dans le dihydrogène du carburant. Une telle pile à combustible 22 présente un différentiel de température relativement important avec la température ambiante, ce qui permet d'utiliser un radiateur 21 présentant un encombrement relativement réduit.

La pile à combustible à basse température 32 présente une température de fonctionnement typiquement comprise entre 60 et 90° C. La pile à combustible peut par exemple être une pile à membrane échangeuse de protons de type fluoropolymère sulfoné, par exemple distribuée sous la référence commerciale Nafion par la société Dupont de Nemours. La pile à combustible à basse température 32 présente de bonnes propriétés de compacité, avec une densité de puissance pouvant par exemple être de 3 kW/L ou de 2 kW/kg.

La pile à combustible à basse température 32 est cependant mal adaptée pour fonctionner à des températures ambiantes supérieures à 50°C, sans faire appel à un radiateur 31 présentant un encombrement excessif.

Les figures 2 à 6 sont des tableaux récapitulant différents états d'ouverture de vannes du système 1 en fonction de sa phase de fonctionnement. La colonne de gauche de chaque tableau identifie chaque vanne par sa référence. La colonne de droite identifie le niveau d'ouverture de chaque vanne sur une échelle de 0 à 100.

Pour illustrer le fonctionnement, on pourra considérer que chacune des piles à combustible 22 et 32, utilisée dans sa plage de température de fonctionnement, devra évacuer une quantité de chaleur de 10 kW. On suppose qu'au démarrage du système 1, ce système 1 est à une température ambiante T0, inférieure à la plage de fonctionnement de la pile à combustible 32. Au démarrage du système 1, la pompe 33 est démarrée, de façon à faire circuler un fluide caloporteur du circuit 2 à travers la pile à combustible 32.

Les vannes 201, 202, 301, 302 et 303 sont placées dans l'état illustré à la figure 2. Les vannes 302 et 303 sont fermées et la vanne 301 est intégralement ouverte. Les vannes 201 et 202 sont fermées. La pompe 23 est désactivée.

On bloque ainsi un écoulement à travers la partie basse température de l'échangeur 4 (ce qui minimise la longueur de l'écoulement dans le circuit 3 et optimise la montée en température du fluide caloporteur), et à travers la partie haute température de cet échangeur 4. On facilite ainsi une montée en température plus rapide du fluide caloporteur dans le circuit 3. Afin d'accélérer la montée en température du fluide caloporteur dans le circuit 3, le dispositif de chauffage 34 est avantageusement activé. Le dispositif de chauffage 34 peut également être activé au préalable pour réchauffer le fluide caloporteur jusqu'à une température garantissant un démarrage correct de la pile à combustible 32 (par exemple si l'eau produite dans la pile à combustible risque d'être gelée au début du démarrage du système 1). Le dispositif de chauffage 34 pourra par exemple présenter une puissance thermique de 2 kW.

Après son démarrage, la pile à combustible 32 s'échauffe sous l'effet des pertes thermiques de sa réaction électrochimique. Lorsque la pile à combustible 32 atteint sa température de fonctionnement (par exemple de 80°C), l'utilisation du dispositif de chauffage 34 ne présente plus d'intérêt. La pile à combustible 32 nécessite alors un refroidissement. L'écoulement à travers le dispositif de chauffage 34 est alors interrompu et un écoulement est établi à travers le radiateur 31.

Les vannes 201, 202, 301, 302 et 303 sont placées dans l'état illustré à la figure 3. Afin d'éviter un passage brutal du fluide caloporteur froid provenant du radiateur 31 dans le circuit 3, la vanne 301 est progressivement fermée et la vanne 303 est progressivement ouverte jusqu'à son ouverture totale. Dans le circuit 3, l'écoulement de fluide caloporteur à travers le dispositif de chauffage 34 et à travers la partie basse température de l'échangeur 4 est alors nul. Les vannes 201 et 202 restent fermées et la pompe 23 reste désactivée.

Après ces phases de démarrage et de montée en température du circuit 3, on souhaite mettre en service la pile combustible 22, et amener au préalable le fluide caloporteur du circuit 2 dans la plage de température de fonctionnement de cette pile à combustible 22. À cet effet, on réalise une surchauffe du fluide caloporteur traversant la partie basse température de l'échangeur 4, en activant le dispositif de chauffage 34 et en rétablissant un écoulement de fluide caloporteur à travers celui-ci.

Les vannes 201, 202, 301, 302 et 303 sont placées dans l'état illustré à la figure 4. La vanne 302 est progressivement ouverte jusqu'à un niveau d'ouverture faible, ici de 5 %. La vanne 303 est légèrement refermée, afin de réduire le débit de fluide caloporteur traversant le radiateur 31. Le débit à travers la vanne 303 est nettement supérieur au débit à travers la vanne 302, afin d'éviter que le dispositif de chauffage 34 ne réchauffe inutilement une partie de l'écoulement de fluide caloporteur traversant le radiateur 31. Si le dispositif de chauffage 34 implique une puissance électrique de 2 kW, avec un fluide caloporteur traversant la partie basse température de l'échangeur 4 à 120° C, avec un débit de fluide caloporteur traversant la pile à combustible 32 se répartissant pour 5 % à travers la vanne 302 et pour 95 % à travers la vanne 303, la température du fluide caloporteur conduit à l'entrée du radiateur 31 atteint seulement 82°C.

La pompe 23 est démarrée lors de l'ouverture de la vanne 302. La vanne 202 est également ouverte. Un écoulement de fluide caloporteur est alors établi à travers la pile à combustible 22 et à travers la partie haute température de l'échangeur 4. La température du fluide caloporteur du circuit 2 augmente alors. La vanne 201 reste avantageusement fermée, afin d'accélérer la montée en température du fluide caloporteur dans le circuit 2.

Lorsque la température du fluide caloporteur traversant la pile à combustible 22 atteint sa température de démarrage (par exemple 110°C), on démarre la pile à combustible 22. Après son démarrage, la pile à combustible 22 s'échauffe sous l'effet des pertes thermiques de sa réaction électrochimique. Pour poursuivre la montée en température du fluide caloporteur dans le circuit 2 sans surchauffer le fluide caloporteur dans le circuit 3, les vannes 201, 202, 301, 302 et 303 sont placées dans l'état illustré à la figure 5. La vanne 302 est fermée pour interrompre les échanges thermiques entre les circuits 2 et 3. La vanne 303 est intégralement ouverte pour permettre le refroidissement du fluide caloporteur du circuit 3 par le radiateur 31.

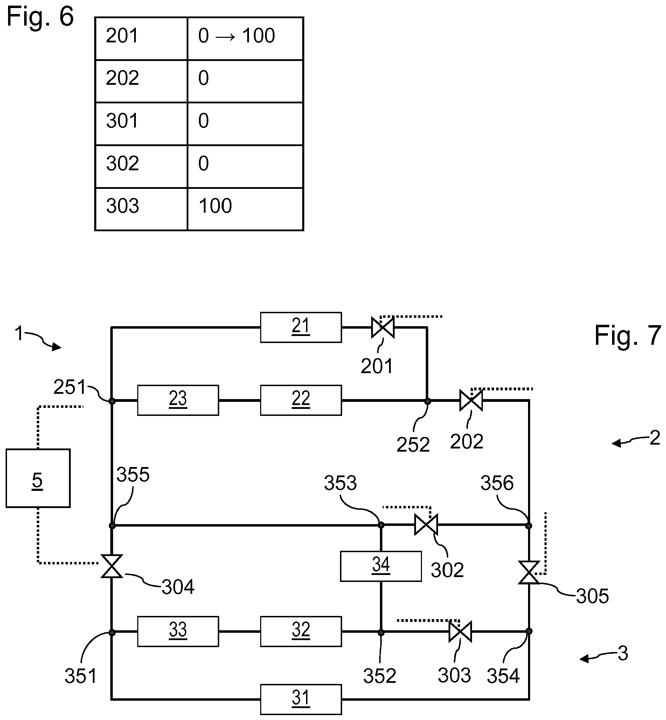

Lorsque la pile à combustible 22 a atteint sa température de fonctionnement de régime établi (par exemple 180°C), on doit alors refroidir le circuit caloporteur du circuit 2 par l'intermédiaire du radiateur 21. Les vannes 201, 202, 301, 302 et 303 sont placées dans l'état illustré à la figure 6. La vanne 201 s'ouvre progressivement et la vanne 202 est fermée.

L'invention permet de réduire la durée de la phase de démarrage, avant que la pile à combustible à haute température 2 atteigne sa température de fonctionnement, pour que le système puisse fonctionner en régime établi. L'invention s'avère particulièrement avantageuse dans des applications embarquées, automobiles ou aéronautiques par exemple.

Le premier mode de réalisation permet d'utiliser des fluides caloporteurs différents dans les circuits 2 et 3. Les fluides caloporteurs respectifs peuvent donc être optimisés pour leurs températures de fonctionnement respectives.

Dans un souci de simplification, on a ici mentionné des niveaux d'ouverture de vannes destinés à moduler les débits dans le circuit 3. On peut cependant également envisager d'utiliser des vannes présentant des dimensionnement différents, en vue de moduler les débits dans les différentes branches du circuit 3 et d'éviter une surchauffe à l'entrée du radiateur 31.

Dans le mode de réalisation illustré à la figure 1, une fois la pile à combustible 22 en régime établi, il est possible d'éteindre indépendamment la pile à combustible 32. Si les alimentations en carburant des piles à combustible 22 et 32 sont différentes (la pile à combustible 32 pouvant par exemple requérir une alimentation en dihydrogène plus pur), on peut alors conserver uniquement l'alimentation moins pure en dihydrogène lorsque la pile 22 est en régime établi.

Afin de réduire la consommation du dispositif de chauffage 34, on peut avantageusement envisager de positionner un autre échangeur de chaleur dans la branche entre les embranchements 352 et 353. Un tel échangeur de chaleur permet par exemple de réchauffer le fluide caloporteur de cette branche avec d'autres composants du système 1 non illustrés et émettant de la chaleur, par exemple un compresseur de comburant.

Avantageusement, pour réchauffer plus rapidement le radiateur 21 après le démarrage de la pile à combustible 32, on peut placer les radiateurs 21 et 31 dans un même flux d'air de refroidissement. Le radiateur 21 est alors avantageusement positionné en aval du radiateur 31 dans ce fluide de refroidissement, afin de bénéficier de la chaleur évacuée par le radiateur 31.

La figure 7 est une représentation schématique d'un système de production d'électricité 1 selon un exemple d'un deuxième mode de réalisation de l'invention. Le système 1 comprend une pile à combustible à haute température 22 et une pile à combustible à basse température 32. Les piles 22 et 32 peuvent être identiques à celles utilisées dans le premier mode de réalisation. La pile à combustible 22 est incluse dans un circuit 2 de fluide caloporteur haute température. Plus particulièrement, des conduits d'écoulement positionnés dans une zone réactive de la pile à combustible 22 sont parcourus par le fluide caloporteur du circuit 2. La pile à combustible 32 est incluse dans le circuit 3 de fluide caloporteur basse température. Plus particulièrement, des conduits d'écoulement positionnés dans une zone réactive de la pile à combustible 32 sont parcourus par le fluide caloporteur du circuit 3. Un même fluide caloporteur s'écoule à travers les circuits 2 et 3. Un tel mode de réalisation permet notamment de disposer d'une meilleure dynamique thermique du système 1. Des liquides de refroidissement distribués sous les références Paratherm LR ou Galden HT200 peuvent par exemple être utilisés à la fois dans le circuit 2 et dans le circuit 3.

Le circuit 2 comporte une première branche traversant un radiateur 21 et une vanne 201 connectés en série. Le circuit 2 comporte une deuxième branche traversant une pompe 23 et la pile à combustible 22. Les première et deuxième branches sont connectées en parallèle entre les embranchements 251 et 252. Le circuit 2 comporte une troisième branche traversant une vanne 202, entre l'embranchement 252 et un embranchement 356 de raccordement avec un circuit 3 de fluide caloporteur basse température. L'embranchement 251 est ici directement connecté avec un embranchement 355 de raccordement avec le circuit 3.

Le circuit 3 comporte une première branche traversant un radiateur 31, connecté entre les embranchements 351 et 354. Le circuit 3 comporte une deuxième branche traversant une pompe 33 et la pile à combustible 32 connectées en série. La deuxième branche est connectée entre l'embranchement 351 et un embranchement 352. Une troisième branche inclut une vanne 303, entre les embranchements 352 et 354. Une quatrième branche inclut une vanne 304, entre l'embranchement 351 et l'embranchement 355. Une cinquième branche inclut un dispositif de chauffage 34 de fluide caloporteur, entre les embranchements 352 et 353. Une sixième branche inclut une vanne 302 entre les embranchements 353 et 356. L'embranchement 353 est ici directement connecté avec l'embranchement 355.

Le système 1 comporte en outre un circuit de commande 5 de l'ouverture/fermeture des vannes 201, 202, 302, 303, 304 et 305.

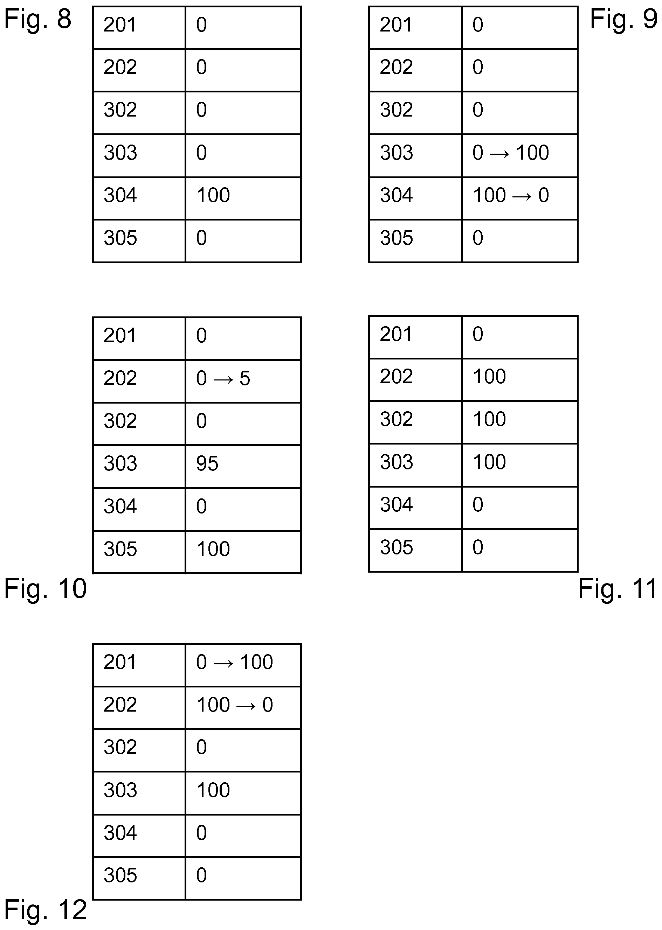

Les figures 8 à 12 sont des tableaux récapitulant différents états d'ouverture de vannes du système 1 de la figure 7 en fonction de sa phase de fonctionnement.

Comme pour le premier mode de réalisation, on pourra considérer que chacune des piles à combustible 22 et 32, utilisée dans sa plage de température de fonctionnement, devra évacuer une quantité de chaleur de 10 kW. Le dispositif de chauffage 34 pourra présenter une puissance thermique de 2 kW. On suppose qu'au démarrage du système 1, ce système 1 est à une température ambiante T0, inférieure à la plage de fonctionnement de la pile à combustible 32.

Au démarrage du système 1, la pompe 33 est démarrée, de façon à faire circuler un fluide caloporteur du circuit 2 à travers la pile à combustible 32.

Les vannes 201, 202, 302, 303, 304 et 305 sont placées dans l'état illustré à la figure 8. Les vannes 201, 202, 302, 303 et 305 sont fermées et la vanne 304 est intégralement ouverte. La pompe 23 est désactivée.

On bloque ainsi un écoulement dans le circuit 2 et à travers le radiateur 31. La longueur de l'écoulement de fluide caloporteur étant particulièrement réduite, on facilite ainsi une montée en température plus rapide du fluide caloporteur dans la partie du circuit 3 incluant la pile à combustible 32. Afin d'accélérer la montée en température du fluide caloporteur dans le circuit 3, le dispositif de chauffage 34 est avantageusement activé. Le dispositif de chauffage 34 peut également être activé au préalable pour réchauffer le fluide caloporteur jusqu'à une température garantissant son écoulement à travers le circuit 3.

Après son démarrage, la pile à combustible 32 s'échauffe sous l'effet des pertes thermiques de sa réaction électrochimique. Lorsque la pile à combustible 32 atteint sa température de fonctionnement (par exemple de 80°C), un écoulement est progressivement établi à travers le radiateur 31, afin d'éviter un passage brutal du fluide caloporteur froid provenant de ce radiateur 31 dans le circuit 3. Les vannes 201, 202, 302, 303, 304 et 305 sont placées dans l'état illustré à la figure 9. La vanne 303 est progressivement ouverte jusqu'à son ouverture totale. La vanne 304 est progressivement fermée. Les vannes 201 et 202 restant fermées et la pompe 23 étant désactivée, l'écoulement à travers la pile à combustible 22 reste nul.

Après ces phases de démarrage et de montée en température du circuit 3, on souhaite mettre en service la pile combustible 22, et amener au préalable le fluide caloporteur du circuit 2 dans la plage de température de fonctionnement de cette pile à combustible 22. À cet effet, on réalise une surchauffe du fluide caloporteur à destination du circuit 2, en activant le dispositif de chauffage 34 et en rétablissant un écoulement de fluide caloporteur à travers celui-ci.

Les vannes 201, 202, 302, 303, 304 et 305 sont placées dans l'état illustré à la figure 10. La vanne 202 et la vanne 305 sont progressivement ouvertes et la pompe 23 est démarrée. La vanne 202 peut être ouverte jusqu'à un niveau d'ouverture faible, par exemple ici de 5%. La vanne 303 est légèrement refermée, afin de réduire le débit de fluide caloporteur traversant le radiateur 31.

Le débit à travers la vanne 303 est nettement supérieur au débit à travers la vanne 202, afin d'éviter que le dispositif de chauffage 34 ne réchauffe inutilement une partie de l'écoulement de fluide caloporteur traversant le radiateur 31. Si le dispositif de chauffage 34 implique une puissance électrique de 2 kW, avec un fluide caloporteur traversant la pompe 23 à 120° C, avec un débit de fluide caloporteur traversant la pile à combustible 32 se répartissant pour 5 % à travers la vanne 202 et pour 95 % à travers la vanne 303, la température du fluide caloporteur conduit à l'entrée du radiateur 31 atteint seulement 82°C.

Un écoulement de fluide caloporteur est alors établi à travers la pile à combustible 22. La vanne 201 reste avantageusement fermée, afin d'accélérer la montée en température du fluide caloporteur dans le circuit 2

Lorsque la température du fluide caloporteur traversant la pile à combustible 22 atteint sa température de démarrage (par exemple 110°C), on démarre la pile à combustible 22. Après son démarrage, la pile à combustible 22 s'échauffe sous l'effet des pertes thermiques de sa réaction électrochimique.

Pour poursuivre la montée en température du fluide caloporteur dans le circuit 2 sans surchauffer le fluide caloporteur dans le circuit 3, les vannes 201, 202, 302, 303, 304 et 305 sont placées dans l'état illustré à la figure 11. Les vannes 304 et 305 sont fermées pour interrompre les échanges thermiques entre les circuits 2 et 3. La vanne 303 est intégralement ouverte pour permettre le refroidissement du fluide caloporteur du circuit 3 par le radiateur 31. L'écoulement de fluide caloporteur à travers le radiateur 21 reste interrompu, pour accélérer la montée en température dans le circuit 2.

Lorsque la pile à combustible 22 a atteint sa température de fonctionnement de régime établi (par exemple 180°C), on doit alors refroidir le circuit caloporteur du circuit 2 par l'intermédiaire du radiateur 21. Les vannes 201, 202, 302, 303, 304 et 305 sont placées dans l'état illustré à la figure 12.

La vanne 201 s'ouvre progressivement et la vanne 202 est fermée progressivement. La vanne 303 est maintenue ouverte, les vannes 302, 304 et 305 étant fermées. Dans cette configuration, on peut aussi utiliser les piles à combustible 22 et 32 indépendamment, les écoulements dans les circuits 2 et 3 étant alors indépendants.

Selon une variante, si la perte de charge à travers la vanne 302 est identique à la perte de charge à travers la vanne 303, on peut connecter directement les embranchements 354 et 356 sans la vanne 305. Selon une autre variante, si la différence de pression entre les embranchements 352 et 353 engendre un écoulement au travers du réchauffeur 34 au cours de la phase de montée en température de la pile 22, une vanne peut être ajoutée entre ces deux embranchements afin d'empêcher l'écoulement dans cette phase.

Afin de réduire la consommation du dispositif de chauffage 34, on peut avantageusement envisager de positionner un autre échangeur de chaleur dans la branche entre les embranchements 352 et 353. Un tel échangeur de chaleur permet par exemple de réchauffer le fluide caloporteur de cette branche avec d'autres composants du système 1 non illustrés et émettant de la chaleur, par exemple un compresseur de comburant.

Avantageusement, pour réchauffer plus rapidement le radiateur 21 après le démarrage de la pile à combustible 32, on peut placer les radiateurs 21 et 31 dans un même flux d'air de refroidissement. Le radiateur 21 est alors avantageusement positionné en aval du radiateur 31 dans ce fluide de refroidissement, afin de bénéficier de la chaleur évacuée par le radiateur 31.

## Revendications

1. Système de génération d'électricité (1), comportant :
- une première pile à combustible (32) présentant une première plage de température de fonctionnement ;
- un premier circuit de refroidissement (3) incluant un fluide caloporteur traversant la première pile à combustible ;
- une deuxième pile à combustible (22) présentant une deuxième plage de température de fonctionnement, dont la borne inférieure est supérieure à la borne supérieure de la première plage de fonctionnement ;
- un deuxième circuit de refroidissement (2) incluant un fluide caloporteur traversant la deuxième pile à combustible ;
**Caractérisé en ce que** :
-le premier circuit de refroidissement comporte une dérivation configurée pour être traversée par du fluide caloporteur ayant traversé la première pile à combustible ;
-le système (1) comprend en outre un dispositif de chauffage (34) du fluide caloporteur présent dans la dérivation ;
-une première vanne ou combinaison de vannes (301, 302) configurée pour sélectivement interrompre ou permettre un écoulement de fluide caloporteur à travers la dérivation lorsque du fluide caloporteur traverse la première pile à combustible (32) ;
-une deuxième vanne ou combinaison de vannes configurée pour :
- soit sélectivement interrompre ou permettre un écoulement de fluide caloporteur provenant de la dérivation à travers la deuxième pile à combustible ;
- soit sélectivement interrompre ou permettre un écoulement de fluide caloporteur provenant de la dérivation à travers un échangeur thermique (4), l'échangeur thermique étant également traversé par le deuxième circuit de refroidissement (2) ;
-un module de commande (5) configuré pour commander simultanément :
-un réchauffage du fluide caloporteur présent dans la dérivation ;
-un écoulement de fluide caloporteur à travers la deuxième pile à combustible (22) ;
-un écoulement de fluide caloporteur provenant de la dérivation à travers la deuxième pile à combustible (22) ou un écoulement du fluide caloporteur provenant de la dérivation à travers ledit échangeur (4).

2. Système (1) selon la revendication 1, comprenant en outre un autre composant dont le fonctionnement dégage de la chaleur, ledit autre composant étant en contact thermique avec le fluide caloporteur dans la dérivation.

3. Système (1) selon la revendication 1 ou 2, dans lequel ledit module de commande est configuré pour commander sélectivement un écoulement de fluide caloporteur à travers la dérivation, cet écoulement à travers ladite dérivation présentant un débit au moins cinq fois inférieur au débit du fluide caloporteur traversant la première pile à combustible (32).

4. Système (1) selon la revendication 3, dans lequel ledit module de commande est configuré pour commander sélectivement un écoulement de fluide caloporteur à travers la dérivation, cet écoulement à travers ladite dérivation présentant un débit au moins dix fois inférieur au débit du fluide caloporteur traversant la première pile à combustible (32).

5. Système (1) selon l'une quelconque des revendications précédentes, dans lequel ledit module de commande (5) est configuré pour commander le démarrage de ladite première pile à combustible (32), et configuré pour commander un chauffage du fluide caloporteur dans la dérivation par le dispositif de chauffage (34) avant démarrage de ladite première pile à combustible.

6. Système (1) selon l'une quelconque des revendications précédentes, dans lequel lesdites première et deuxième piles à combustible sont du type à membrane échangeuse de protons, la borne inférieure de la deuxième plage de température de fonctionnement est au moins égale à 100°C.

7. Système (1) selon l'une quelconque des revendications précédentes, dans lequel la deuxième vanne ou combinaison de vannes est configurée pour interrompre un écoulement de fluide caloporteur provenant de la dérivation à travers la deuxième pile à combustible, le même fluide caloporteur étant disposé dans les premier et deuxième circuits de refroidissement (3,2).

8. Système (1) selon l'une quelconque des revendications précédentes, dans lequel les premier et deuxième circuits de refroidissement (3, 2) incluent respectivement des première et deuxième pompes connectées en série respectivement avec les écoulements de fluide de refroidissement traversant les première et deuxième piles à combustible.

9. Système (1) selon l'une quelconque des revendications précédentes, dans lequel ledit premier circuit de refroidissement (3) inclut un premier radiateur (31) et une troisième vanne ou combinaison de vannes, configurée pour sélectivement interrompre un écoulement de fluide caloporteur à travers ledit premier radiateur (31).

10. Système (1) selon l'une quelconque des revendications précédentes, dans lequel ledit deuxième circuit de refroidissement (2) inclut un deuxième radiateur (21) et une quatrième vanne ou combinaison de vannes, configurée pour sélectivement interrompre un écoulement de fluide caloporteur à travers ledit deuxième radiateur (21).

## Patentansprüche

1. Stromerzeugungssystem (1), welches umfasst:
- eine erste Brennstoffzelle (32), die einen ersten Betriebstemperaturbereich aufweist;
- einen ersten Kühlkreislauf (3), der ein Wärmeträgerfluid enthält, das die erste Brennstoffzelle durchströmt;
- eine zweite Brennstoffzelle (22), die einen zweiten Betriebstemperaturbereich aufweist, dessen untere Grenze höher als die obere Grenze des ersten Betriebstemperaturbereichs ist;
- einen zweiten Kühlkreislauf (2), der ein Wärmeträgerfluid enthält, das die zweite Brennstoffzelle durchströmt;
**dadurch gekennzeichnet, dass**:
- der erste Kühlkreislauf eine Zweigleitung aufweist, die dafür ausgelegt ist, von Wärmeträgerfluid durchströmt zu werden, das die erste Brennstoffzelle durchströmt hat;
- das System (1) außerdem eine Heizvorrichtung (34) für das in der Zweigleitung vorhandene Wärmeträgerfluid aufweist;
- ein erstes Ventil oder eine erste Ventilkombination (301, 302) dafür ausgelegt ist, ein Fließen von Wärmeträgerfluid durch die Zweigleitung selektiv zu unterbrechen oder zu ermöglichen, wenn Wärmeträgerfluid die erste Brennstoffzelle (32) durchströmt;
- ein zweites Ventil oder eine zweite Ventilkombination dafür ausgelegt ist:
- entweder ein Fließen von Wärmeträgerfluid, das von der Zweigleitung kommt, durch die zweite Brennstoffzelle selektiv zu unterbrechen oder zu ermöglichen;
- oder ein Fließen von Wärmeträgerfluid, das von der Zweigleitung kommt, durch einen Wärmetauscher (4) selektiv zu unterbrechen oder zu ermöglichen, wobei der Wärmetauscher auch von dem zweiten Kühlkreislauf (2) durchquert wird;
- ein Steuerungsmodul (5) dafür ausgelegt ist, gleichzeitig zu steuern:
- eine Erwärmung des in der Zweigleitung vorhandenen Wärmeträgerfluids;
- ein Fließen von Wärmeträgerfluid durch die zweite Brennstoffzelle (22);
- ein Fließen von Wärmeträgerfluid, das von der Zweigleitung kommt, durch die zweite Brennstoffzelle (22), oder ein Fließen des Wärmeträgerfluids, das von der Zweigleitung kommt, durch den Wärmetauscher (4).

2. System (1) nach Anspruch 1, welches außerdem eine weitere Komponente umfasst, deren Betrieb Wärme freisetzt, wobei die weitere Komponente in thermischem Kontakt mit dem Wärmeträgerfluid in der Zweigleitung steht.

3. System (1) nach Anspruch 1 oder 2, wobei das Steuerungsmodul dafür ausgelegt ist, ein Fließen von Wärmeträgerfluid durch die Zweigleitung selektiv zu steuern, wobei dieses Fließen durch die Zweigleitung eine Durchflussmenge aufweist, die höchstens ein Fünftel der Durchflussmenge des Wärmeträgerfluids beträgt, das durch die erste Brennstoffzelle (32) strömt.

4. System (1) nach Anspruch 3, wobei das Steuerungsmodul dafür ausgelegt ist, ein Fließen von Wärmeträgerfluid durch die Zweigleitung selektiv zu steuern, wobei dieses Fließen durch die Zweigleitung eine Durchflussmenge aufweist, die höchstens ein Zehntel der Durchflussmenge des Wärmeträgerfluids beträgt, das durch die erste Brennstoffzelle (32) strömt.

5. System (1) nach einem der vorhergehenden Ansprüche, wobei das Steuerungsmodul (5) dafür ausgelegt ist, das Starten der ersten Brennstoffzelle (32) zu steuern, und dafür ausgelegt ist, eine Erwärmung des Wärmeträgerfluids in der Zweigleitung durch die Heizvorrichtung (34) vor dem Starten der ersten Brennstoffzelle zu steuern.

6. System (1) nach einem der vorhergehenden Ansprüche, wobei die erste und die zweite Brennstoffzelle vom Typ mit Protonenaustauschmembran sind, wobei die untere Grenze des zweiten Betriebstemperaturbereichs mindestens gleich 100 °C ist.

7. System (1) nach einem der vorhergehenden Ansprüche, wobei das zweite Ventil oder die zweite Ventilkombination dafür ausgelegt ist, ein Fließen von Wärmeträgerfluid, das von der Zweigleitung kommt, durch die zweite Brennstoffzelle zu unterbrechen, wobei sich dasselbe Wärmeträgerfluid im ersten und zweiten Kühlkreislauf (3, 2) befindet.

8. System (1) nach einem der vorhergehenden Ansprüche, wobei der erste und der zweite Kühlkreislauf (3, 2) eine erste bzw. zweite Pumpe enthalten, die mit den Strömen von Kühlfluid, welche durch die erste bzw. zweite Brennstoffzelle strömen, in Reihe geschaltet sind.

9. System (1) nach einem der vorhergehenden Ansprüche, wobei der erste Kühlkreislauf (3) einen ersten Kühler (31) und ein drittes Ventil oder eine dritte Ventilkombination, das bzw. die dafür ausgelegt ist, ein Fließen von Wärmeträgerfluid durch den ersten Kühler (31) selektiv zu unterbrechen, enthält.

10. System (1) nach einem der vorhergehenden Ansprüche, wobei der zweite Kühlkreislauf (2) einen zweiten Kühler (21) und ein viertes Ventil oder eine vierte Ventilkombination, das bzw. die dafür ausgelegt ist, ein Fließen von Wärmeträgerfluid durch den zweiten Kühler (21) selektiv zu unterbrechen, enthält.

## Claims

1. Electricity generation system (1) including:
- a first fuel cell (32) having a first operating temperature range;
- a first cooling circuit (3) containing a heat-transfer fluid passing through the first fuel cell;
- a second fuel cell (22) having a second operating temperature range, the lower boundary of which is higher than the higher boundary of the first operating range;
- a second cooling circuit (2) containing a heat-transfer fluid passing through the second fuel cell;
**characterized in that**:
- the first cooling circuit includes a branch configured for the heat-transfer fluid that has passed through the first fuel cell to pass therethrough;
- the system (1) further comprises a device (34) for heating the heat-transfer fluid present in the branch;
- a first valve or combination of valves (301, 302) configured to selectively interrupt or allow a flow of heat-transfer fluid through the branch when the heat-transfer fluid is passing through the first fuel cell (32);
- a second valve or combination of valves configured:
- either to selectively interrupt or allow a flow of heat-transfer fluid from the branch to the second fuel cell;
- or to selectively interrupt or allow a flow of heat-transfer fluid from the branch through a heat exchanger (4), the second cooling circuit (2) also passing through the heat exchanger;
- a control module (5) configured to simultaneously control:
- a reheating of the heat-transfer fluid present in the branch;
- a flow of heat-transfer fluid through the second fuel cell (22);
- a flow of heat-transfer fluid from the branch through the second fuel cell (22) or a flow of the heat-transfer fluid from the branch through said exchanger (4).

2. System (1) according to Claim 1, further comprising another component, the operation of which gives off heat, said other component being in thermal contact with the heat-transfer fluid in the branch.

3. System (1) according to Claim 1 or 2, wherein said control module is configured to selectively control a flow of heat-transfer fluid through the branch, this flow through said branch having a flow rate that is at least five times lower than the flow rate of heat-transfer fluid through the first fuel cell (32).

4. System (1) according to Claim 3, wherein said control module is configured to selectively control a flow of heat-transfer fluid through the branch, this flow through said branch having a flow rate that is at least ten times lower than the flow rate of heat-transfer fluid through the first fuel cell (32).

5. System (1) according to any one of the preceding claims, wherein said control module (5) is configured to control the startup of said first fuel cell (32), and configured to control the heating of the heat-transfer fluid in the branch by the heating device (34) before startup of said first fuel cell.

6. System (1) according to any one of the preceding claims, wherein said first and second fuel cells are proton-exchange-membrane fuel cells, the lower boundary of the second operating temperature range being at least equal to 100°C.

7. System (1) according to any one of the preceding claims, wherein the second valve or combination of valves is configured to interrupt a flow of heat-transfer fluid from the branch through the second fuel cell, the same heat-transfer fluid being arranged in the first and second cooling circuits (3, 2).

8. System (1) according to any one of the preceding claims, wherein the first and second cooling circuits (3, 2) include first and second pumps, respectively, connected in series with the flows of coolant fluid passing through the first and second fuel cells, respectively.

9. System (1) according to any one of the preceding claims, wherein said first cooling circuit (3) includes a first radiator (31) and a third valve or combination of valves, which is configured to selectively interrupt a flow of heat-transfer fluid through said first radiator (31).

10. System (1) according to any one of the preceding claims, wherein said second cooling circuit (2) includes a second radiator (21) and a fourth valve or combination of valves, which is configured to selectively interrupt a flow of heat-transfer fluid through said second radiator (21).
